# EUROPÄISCHE PATENTSCHRIFT

(11) **EP 0 808 737 B1**
(45) Veröffentlichungstag und Bekanntmachung des Hinweises auf die Patenterteilung: **28.06.2000**
(21) Anmeldenummer: 97105330.1
(22) Anmeldetag: 29.03.1997
(51) Int. Cl.: B60K 37/00

(54) **Armaturenbrett für ein Kraftfahrzeug**
Dashboard for a motor vehicle
Tableau de bord pour véhicule à moteur

(30) Priorität: 24.05.1996 DE 19620921
(43) Veröffentlichungstag der Anmeldung: 26.11.1997
(73) Patentinhaber: Behr GmbH & Co., D-70469 Stuttgart (DE)
(72) Erfinder: Eilemann, Andreas, Dr., 70825 Korntal-Münchingen (DE); Klingler, Dietrich, 73540 Heubach (DE)
(74) Vertreter: Heumann, Christian

(56) Entgegenhaltungen:
- DE-A- 4 423 108
- FR-A- 2 696 382

## Beschreibung

Die Erfindung betrifft ein Armaturenbrett für ein Kraftfahrzeug nach dem Oberbegriff des Patentanspruchs 1.

Aus der **EP 0 185 856 B1** ist es bekannt, ein Armaturenbrett aus zwei Armaturenteilen auszubilden, die jeweils angeformte Wände aufweisen zur Bildung eines Kanals. Dieser Kanal dient zur Aufnahme von Komponenten der Belüftungs- und Heizungsanlage, beispielsweise zur Aufnahme von Luftführungsverbindungen zwischen einer Heizungs- oder Klimaanlage und den entsprechenden Austrittsdüsen. Nachteilig an dem bekannten Armaturenbrett ist, daß zur Ausbildung der Kanäle den Armaturenteilen im wesentlichen senkrechte Wände dünner Wandstärke angeformt sind. Es ist daher eine passgenaue Ausformung der Armaturenteile erforderlich, damit die korrespondierenden Anlageflächen der benachbarten Armaturenteile im wesentlichen bündig aneinanderliegen. Weiterhin ist ein großer Montageaufwand notwendig, weil die einzelnen Komponenten der Heizungs- bzw. Belüftungsanlage in dafür vorgesehene Aussparungen eingesetzt werden müssen.

Aus der DE 44 23 108 ist ein Armaturenbrett bekannt, das aus einem Ober- und einem Unterteil, die aus einem Polypropylenschaum bestehen, gebildet ist. Zwischen Ober- und Unterteil sind Hohlräume gebildet, die zur Luftführung nutzbar sind.

Der Erfindung liegt die Aufgabe zugrunde, ein Armaturenbrett derart auszubilden, daß Luftkanäle innerhalb eines Armaturenbrettes auf einfache Weise und in beliebiger Form gebildet werden können.

Zur Lösung der Aufgabe weist die Erfindung die kennzeichnenden Merkmale des Anspruchs 1 auf.

Erfindungsgemäß weist das Armaturenbrett Schalldämpfungsschichten aus einem schalldämpfenden Werkstoff auf, die schichtweise übereinander angeordnet sind. Die aufeinander gestapelten Schalldämpfungsschichten weisen Ausnehmungen und/oder Öffnungen auf, so daß eine beliebige Form bzw. ein beliebiger Querschnitt der Luftkanäle erzielt werden kann. Durch Vorsehen mehrerer solcher Schalldämpfungschichten ist es möglich, mehrere übereinander angeordnete Luftkanäle, die sich in verschiedene Richtungen erstrecken, auszubilden. Es wird zum einen der bei Betrieb einer Heizungs- oder Klimaanlage entstehende Schall wirksam gedämpft. Zu diesem Zweck ist das Armaturenbrett vorzugsweise vollständig mit diesen Schalldämpfungsschichten ausgefüllt. Zum anderen ermöglicht die lagenweise Anordnung der Schalldämpfungsschichten, daß sich die Luftkanäle in beliebiger Richtung erstrecken können. Es ist nicht mehr notwendig, zusätzlich Luftführungsverbindungen innerhalb des Armaturenbretts zu verlegen. Dadurch, daß das Armaturenbrett im wesentlichen vollständig mit dem schallabsorbierenden Werkstoff ausgefüllt ist und lediglich Öffnungen und Ausnehmungen aufweist, kann eine vergrößerte Formstabilität des Armaturenbretts erzielt werden.

Die Schalldämpfungsschichten sind als geschäumte Formteile herstellbar und werden an dem oberen Armaturenteil befestigt. Vorzugsweise bestehen die Schalldämpfungsschichten aus einem flexiblen, offenporigen Schaumstoff.

Nach einer Ausgestaltung der Erfindung bestehen die Armaturenteile und/oder Schalldämpfungsschichten aus einem geschäumten Kunststoff, insbesondere aus einem expandierten Polypropylen-Werkstoff. Als zähelastischer Hartschaum gewährleistet dieser Werkstoff eine erhöhte Quer- und Längssteifigkeit des Armaturenbretts.

Auf einfache Weise wird mit der Erfindung die Montage einer kompakten Heizungs- oder Klimaanlage an ein luftkanalführendes Armaturenbrett ermöglicht, wobei lediglich die Öffnungen des Austrittsstutzens der Heizungs- oder Klimaanlage und die Eintrittsöffnungen des Armaturenbretts zueinander korrespondieren müssen. Mit geringem Montageaufwand kann zum einen eine Heizungs- oder Klimaanlage hergestellt und zum anderen ein integrierte Luftführungskanäle aufweisendes Armaturenbrett hergestellt und miteinander verbunden werden. An den Austrittsöffnungen brauchen lediglich entsprechende Austrittsdüsenelemente eingepaßt werden.

Ein Ausführungsbeispiel der Erfindung wird nachstehend anhand der Zeichnungen näher erläutert. Es zeigen:
- **Fig. 1**: Eine perspektivische Darstellung eines Armaturenbretts;
- **Fig. 2**: einen Schnitt durch das Armaturenbrett nach Fig. 1 entlang der Linie II-II;
- **Fig. 4**: eine perspektivische Darstellung eines Blockes mehrerer Lagen von Schalldämpfungsschichten, der an einem oberen Armaturenteil befestigt wird, sowie einen Ausschnitt eines durch den Block verlaufenden Luftkanals und
- **Fig. 5**: eine perspektivische Darstellung mehrerer Schalldämpfungsschichten, die im zusammengesetzten Zustand den Block nach Fig. 4 darstellen.

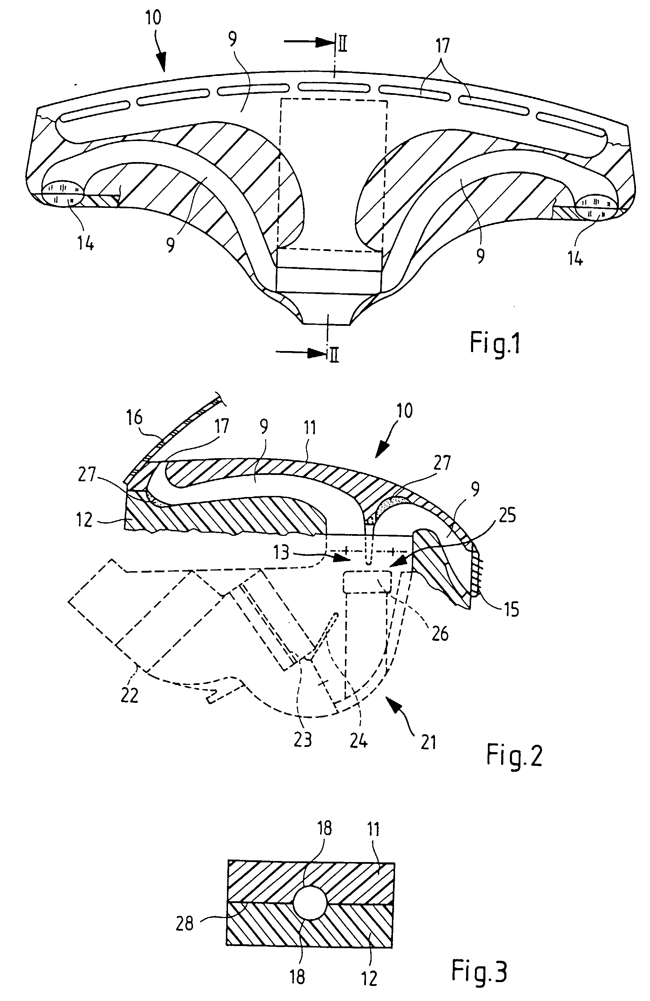

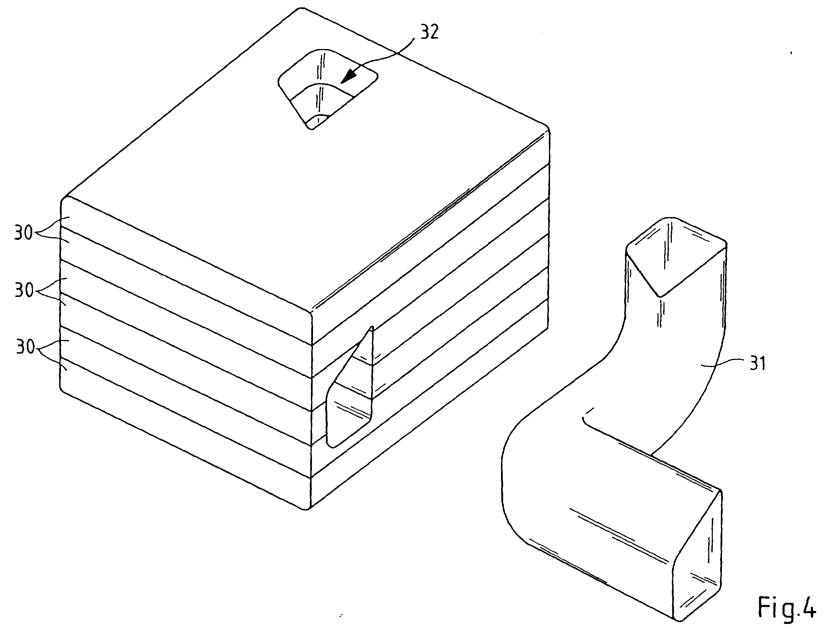

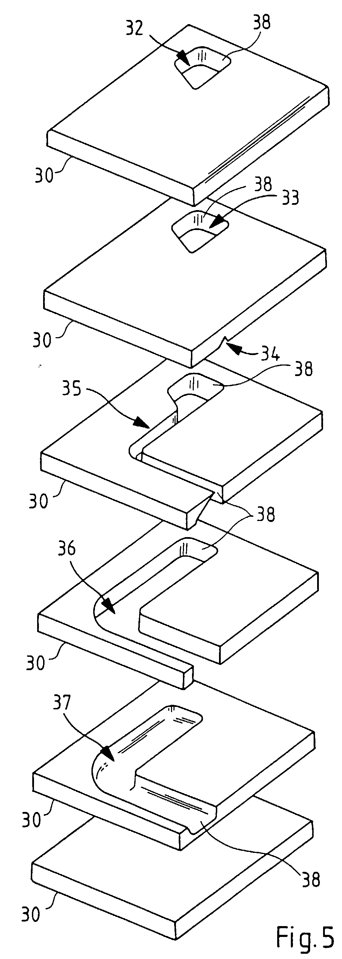

**Fig. 1** zeigt die Umrisse eines Armaturenbretts 10, in dem mehrere Luftführungskanäle angeordnet sind. Das Armaturenbrett 10 weist ein oberes Armaturenteil 11 und ein unteres Armaturenteil 12 auf. Diese Armaturenteile 11, 12 bestehen aus einem geschäumten Kunststoff, vorzugsweise aus einem expandierten Polypropylen (EPP). Die Armaturenteile 11 und 12 bilden nach dem Zusammensetzen einen Innenraum des Armaturenbretts 10, der wie in **Fig. 4** und **Fig. 5** dargestellt durch mehrere Lagen waagerechter Schalldämpfungsschichten 30 ausgefüllt ist. Die Schalldämpfungsschichten ' 30 bestehen aus einem schalldämpfenden Material. Die Schalldämpfungsschichten 30 weisen eine relativ dünne Wandstärke auf, so daß bei einer entsprechenden Anzahl aufeinander gestapelten Schalldämpfungsschichten 30 ein Luftkanal 31 gebildet wird, der nicht nur einen kontinuierlichen Luftstrom in einer Ebene leitet, sondern darüber hinaus einen kontinuierlichen Luftstrom in beliebiger Richtung gewährleistet.

Wie aus **Fig. 4** und **Fig. 5** zu ersehen ist, kann der Luftkanal 31 in dreidimensionaler Richtung von einem oberen Eckbereich der obersten Schalldämpfungsschicht 30 bogenförmig nach unten verlaufen und nach einer Umlenkung von 90ø parallel zu einer Längsmittelebene der Schalldämpfungsschichten 30 zu einem seitlichen Bereich verlaufen. Zu diesem Zweck weisen die beiden obersten Schalldämpfungsschichten 30 jeweils eine Öffnung 32 bzw. 33 auf, wobei die Schalldämpfungsschichten 30 im wesentlichen fluchtend zu den Öffnungen 32 und 33 übereinandergelegt sind. Die Öffnungen 32 und 33 haben die Form eines Kreissektors. Die zweitoberste Schalldämpfungsschicht 30 weist an ihrer Unterseite eine keilförmige Ausnehmung 34 auf, deren Verlauf zu dem Verlauf einer Aussparung 35 der sich nach unten hin anschließenden benachbarten Schalldämpfungsschicht 30 korrespondiert. Die Aussparung 35 weitet sich nach unten hin im Querschnitt keilförmig auf und weist den gleichen winkelförmigen Verlauf auf wie eine Aussparung 36 der sich nach unten hin anschließenden Schalldämpfungsschicht 30. Eine weitere Schalldämpfungsschicht 30, die sich nach unten hin anschließt, weist eine Ausnehmung 37 auf, so daß nach Zusammensetzung der Schalldämpfungsschichten 30 der Luftkanal 31 gebildet ist, dessen Verlauf in Fig. 4 dargestellt ist.

Durch das Aufeinanderschichten einer gewissen Anzahl von Schalldämpfungsschichten 30 ist somit ein Luftkanal 31 ausgebildet, der bei einem kontinuierlichen Verlauf je nach den Erfordernissen in beliebiger Richtung verlaufen kann. Zu diesem Zweck müssen die Schichten lediglich mit entsprechenden Prägungen oder Stanzungen versehen werden zur Ausbildung der Öffnungen 32, 33, Ausnehmungen 34, 37 und Aussparungen 35, 36. Die Schalldämpfungsschichten 30 bestehen aus einem schalldämpfenden Material, vorzugsweise aus einem offenporigen Schaumstoff. Dieser kann als geschäumter Kunststoff, als PE-Schaum oder PU-Schaum ausgebildet sein. Die Schalldämpfungsschichten 30 werden übereinander gelegt und seitlich durch geeignete Befestigungsmittel zusammengehalten. Nachfolgend werden sie untenseitig an dem oberen Armaturenbrett 11 befestigt.

Die Schalldämpfungsschichten 30 können auch aus einem unterschiedlichen Material bestehen, so daß eine gezielte Beeinflussung der zu dämpfenden Schallfrequenz durchgeführt werden kann. Dazu müssen entsprechende Materialien unterschiedlicher schallabsorbierender Eigenschaften ausgewählt werden, die in Abhängigkeit vom Ort der Schallquelle bzw. vom Verlauf des Schalls innerhalb des Schichtaufbaus der Schalldämpfungsschichten 30 angeordnet sind. Durch Erhöhung der Anzahl der Schalldämpfungsschichten 30 wird zudem die Kontinuierlichkeit bzw. Gleichmäßigkeit des Luftstroms - ohne daß scharfe Kanten zur Verwirbelung führen - erhöht. Dies führt zu einer weiteren Reduktion des im Luftstrom transportierten Geräusches. Darüber hinaus ermöglicht eine solche mehrlagige Anordnung der Schalldämpfungsschichten 30, daß Luftkanäle in beliebiger Richtung verlaufen können. Beispielsweise können sich Luftkanäle in der Höhe versetzt kreuzen. Dies ermöglicht einen platzsparenden Aufbau des Armaturenbretts.

Zur Abwehr von Bakterien weisen die Öffnungen 32, 33, die Ausnehmungen 34, 37 sowie die Aussparungen 35, 36 eine dünnen Verhautungsschicht 38 auf, die jeweils nach dem Herstellen der einzelnen Schalldämpfungsschichten 30 aufgebracht wird. Die Verhautungsschicht 38 besteht vorzugsweise aus einem Vlies-Werkstoff.

Auf diese Weise können, wie in Fig. 2, in der die einzelnen Schalldämpfungsschichten nicht gezeigt sind, dargestellt ist, Luftkanäle 9 ausgebildet werden, die von einem Eintrittsbereich 13 des Armaturenbretts 10, der sich an einer Unterseite des unteren Armaturenteils 12 befindet, hin zu jeweils einer seitlich angeordneten Seitendüsen-Austrittsöffnung 14, zu einer sich nach vorne erstreckenden Mitteldüsen-Austrittsöffnung 15 und zu mehreren im Bereich einer Windschutzscheibe 16 angeordneten Defroster-Austrittsöffnungen 17. Der Luftkanal 9 zu der Defroster-Austrittsöffnung 17 erstreckt sich im wesentlichen konkavförmig in Richtung der Windschutzscheibe 16, wobei sich der Querschnitt dieses Kanals 9 im Bereich der Defrosterdüsen-Austrittsöffnung 17 verschmälert.

Unterhalb des Eintrittsbereichs 13 ist eine Klimaanlage 21 fest mit dem Armaturenbrett 10 verbunden. Die Klimaanlage 21 ist in an sich bekannter Weise ausgebildet und weist einen Verdampfer 22 und einen Heizkörper 23 auf, wobei mittels einer Mischklappe 24 die Temperatur des durch die Austrittsöffnungen 25 der Klimaanlage 21 hindurchgeleiteten Luftstroms eingestellt wird. Im Bereich der Klimaanlage 21 ist seitlich ein Ausgangsstutzen 26 vorgesehen, durch den ein Luftstrom in Richtung der nicht gezeigten Fußraumsauslaßdüsen abgeleitet wird.

In Abhängigkeit von den Erfordernissen hinsichtlich der Dimensionierung des Armaturenbretts 10 lassen sich die Armaturenteile 11 und 12 auf einfache Weise als Spritzteile herstellen. Dadurch, daß das Armaturenbrett 10 fast vollständig mit einem geschäumten Kunststoff ausgefüllt ist - mit Ausnahme der Luftkanäle 9 bzw. weiterer Kanäle für elektrische Kabel - wird eine kompakte Form geschaffen, die darüber hinaus auch schalldämpfend wirkt.

Die Armaturenteile 11 und 12 können so geformt sein, daß ein querverlaufender - nicht dargestellter - Querträger umspritzbar ist, so daß eine ausreichende Quersteifigkeit des Fahrzeugs gewährleistet ist.

## Patentansprüche

1. Armaturenbrett für ein Kraftfahrzeug, aufweisend ein oberes Armaturenteil (11) und ein unteres Armaturenteil (12), wobei die aneinanderliegenden Armaturenteile (11, 12) auf einer jeweils dem benachbarten Armaturenteil zugewandten Seite mindestens einen Innenraum bilden, **dadurch gekennzeichnet**, daß in dem Innenraum des Armaturenbretts mehrere Schalldämpfungsschichten (30) aus einem schallabsorbierenden Werkstoff vorgesehen sind, wobei die Schalldämpfungsschichten (30) in mehreren Lagen aneinander angeordnet sind und jeweils Öffnungen (32, 33) und/oder Ausnehmungen (34, 37) und/oder Aussparungen (35, 36) aufweisen zur Ausbildung mindestens eines sich in dreidimensionaler Richtung erstreckenden Luftkanals (31).

2. Armaturenbrett für ein Kraftfahrzeug nach Anspruch 1, **dadurch gekennzeichnet**, daß die Dicke und die Anzahl der Schalldämpfungsschichten (30) derart ausgebildet ist, daß die Luftströmung ohne Druckverminderung durch den Luftkanal (31) geleitet wird.

3. Armaturenbrett für ein Kraftfahrzeug nach Anspruch 1 oder 2, **dadurch gekennzeichnet**, daß die Schalldämpfungsschichten (30) lösbar mit dem oberen Armaturenteil (12) verbunden sind.

4. Armaturenbrett für ein Kraftfahrzeug nach einem oder mehreren der Ansprüche 1 bis 3, **dadurch gekennzeichnet**, daß die Schalldämpfungsschichten (30) als offenporiges geschäumtes Formteil ausgebildet sind.

5. Armaturenbrett für ein Kraftfahrzeug einem der vorhergehenden Ansprüche, **dadurch gekennzeichnet**, daß die Armaturenteile (11, 12) und Schalldämpfungsschichten (30) aus einem geschäumten Kunststoff, insbesondere aus expandiertem Polypropylen (EPP), bestehen.

6. Armaturenbrett für ein Kraftfahrzeug nach einem oder mehreren der Ansprüche 1 bis 5, **dadurch gekennzeichnet**, daß die Armaturenteile (11, 12) und Schalldämpfungsschichten (3) an ihren Anlageflächen (28) durch Klebung miteinander verbunden sind.

7. Armaturenbrett für ein Kraftfahrzeug nach einem oder mehreren der Ansprüche 1 bis 6, **dadurch gekennzeichnet**, daß in dem Armaturenbrett (10) ein sich zwischen den seitlichen Karosseriewänden erstreckender Querträger angeordnet ist, an dem das Armaturenbrett (10) durch Umspritzung gehalten ist.

8. Armaturenbrett für ein Kraftfahrzeug nach einem oder mehreren der Ansprüche 1 bis 7, **dadurch gekennzeichnet**, daß die Innenwände der Schalldämpfungsschichten (30) mit einer dünnen Verhautungsschicht (38) beschichtet sind zur Fernhaltung von Bakterien.

## Claims

1. A dashboard for a motor vehicle, having a top dashboard part (11) and a bottom dashboard part (12), the adjacently arranged dashboard parts (11, 12) forming an interior compartment on a side facing the respective adjacent dashboard part, **characterised in that** several sound-proofing layers (30) of a sound-proofing material are provided in the interior compartment of the dashboard, the sound-proofing layers (30) being arranged in a plurality of layers one against the other and having respective openings (32/33) and/or recesses (34, 37) and/or cut-out portions (35, 36) in order to form at least one air passage (31) extending in a three-dimensional direction.

2. A dashboard for a motor vehicle as claimed in claim 1, **characterised in that** the thickness and the number of sound-proofing layers (30) are such that the air flow is fed through the air passage (31) without any loss of pressure.

3. A dashboard for a motor vehicle as claimed in claim 1 or 2, **characterised in that** the sound-proofing layers (30) are detachably joined to the top dashboard part (12).

4. A dashboard for a motor vehicle as claimed in one or more of claims 1 to 3, **characterised in that** the sound-proofing layers (30) are open-pored, foam moulded components.

5. A dashboard for a motor vehicle as claimed in one or more of the preceding claims, **characterised in that** the dashboard parts (11, 12) and sound-proofing layers (30) consist of a foamed synthetic material, in particular expanded polypropylene (EPP).

6. A dashboard for a motor vehicle as claimed in one or more of claims 1 to 5, **characterised in that** the dashboard parts (11, 12) and sound-proofing layers (30) are joined to one another at their contact surfaces (28) by adhesive.

7. A dashboard for a motor vehicle as claimed in one or more of claims 1 to 6, **characterised in that** a cross-member is provided in the dashboard (10) between the side walls of the bodywork, on which the dashboard (10) is retained by a moulding process.

8. A dashboard for a motor vehicle as claimed in one or more of claims 1 to 7, **characterised in that** the inner walls of the sound-proofing layers (30) are coated with a thin layer of skin (38) for keeping bacteria at bay.

## Revendications

1. Tableau de bord pour véhicule automobile, présentant une partie supérieure de tableau de bord (11) et une partie inférieure de tableau de bord (12), dans lequel les parties de tableau de bord (11, 12) en appui les unes contre les autres forment sur un côté dirigé vers la partie de tableau respectivement adjacente au moins un espace intérieur, caractérisé en ce qu'il est prévu dans l'espace intérieur du tableau de bord plusieurs couches insonorisantes (30) faites d'une matière qui absorbe les sons, les couches insonorisantes (30) étant disposées l'une contre l'autre en plusieurs assises et présentant respectivement des ouvertures (32, 33) et/ou des évidements (34, 37) et/ou des découpures (35, 36) pour former au moins un conduit d'air (31) qui s'étend dans une direction tridimensionnelle.

2. Tableau de bord pour véhicule automobile selon la revendication 1, caractérisé en ce que l'épaisseur et le nombre des couches insonorisantes (30) sont tels que le flux d'air soit conduit à travers le conduit d'air (31) sans diminution de la pression.

3. Tableau de bord pour véhicule automobile selon la revendication 1 ou 2, caractérisé en ce que les couches insonorisantes (30) sont réunies à la partie supérieure (12) du tableau de bord de façon démontable.

4. Tableau de bord pour véhicule automobile selon une des revendications 1 à 3, caractérisé en ce que les couches insonorisantes (30) sont réalisées sous la forme d'une pièce moulée en mousse à alvéoles ouverts.

5. Tableau de bord pour véhicule automobile selon une des revendications précédentes, caractérisé en ce que les parties (11, 12) du tableau de bord et les couches insonorisantes (30) sont composées d'une matière plastique en mousse, en particulier d'un polypropylène (EPP) expansé.

6. Tableau de bord pour véhicule automobile selon une des revendications 1 à 5, caractérisé en ce que les parties (11, 12) du tableau de bord et les couches insonorisantes (3) sont réunies entre elles au niveau de leurs surfaces de contact (28) par collage.

7. Tableau de bord pour véhicule automobile selon une des revendications 1 à 6, caractérisé en ce que, dans le tableau de bord (10), est disposée une poutre transversale qui s'étend entre les parois latérales de la carrosserie, et à laquelle le tableau de bord (10) est fixé par surmoulage.

8. Tableau de bord pour véhicule automobile selon une des revendications 1 à 7, caractérisé en ce que les parois intérieures des couches insonorisantes (30) sont revêtues d'une mince couche de formation de peau (38) pour les préserver des bactéries.
